# EUROPEAN PATENT SPECIFICATION

(11) **EP 0 419 350 B1**
(45) Date of publication and mention of the grant of the patent: **19.10.1994**
(21) Application number: 90402583.0
(22) Date of filing: 19.09.1990
(51) Int. Cl.: B66B 11/00, F16F 3/08

(54) **Adjustable device for the insulation of machines**
Regelbare Vorrichtung für Maschinenisolierung
Dispositif réglable pour l'isolation des machines

(30) Priority: 19.09.1989 ES 8903174
(43) Date of publication of application: 27.03.1991
(73) Proprietor: OTIS ELEVATOR COMPANY, Farmington, CT 06032 (US)
(72) Inventor: Sevilleja, Jose, E-28041 Madrid (ES); Sandoval, Jose M., E-28916 Leganes - Madrid (ES)
(74) Representative: Jolly, Jean-Pierre

(56) References cited:
- EP-A- 0 019 066
- DE-A- 2 441 882
- US-A- 3 107 377

## Description

### SUBJECT-MATTER OF THE INVENTION

The present invention as set forth hereinafter in this description relates to an adjustable device for the insulation of machines

An object of the invention is to provide that, at the support points for a frame structure or bed of machines which are subjected to a vibration movement, there are resilient vibration-insulating elements whose support surface area or dimensioning in plan may be adapted to the respective load at the support point, in such a way that the resilient element at each of the support points involves the same degree of deformation in order in that way for the machine to be held invariably in a horizontal position and in order to optimise operation thereof, in particular as regards vibration.

The invention is especially intended for use in elevator installations, more specifically at the supports for the structure for raising the body of the elevator, which is located in the machineery room. The structure for raising the body of the elevator does not exhibit uniform distribution of the corresponding loads to each of the support points since differences occur in use in regard to weight, load on the pulley arrangement, space limitations etc, which in practice result in differences in respect of loading between each of the points at which the structure is supported on the concrete base or metal platform or plate, between which is interposed a vibration-absorbing element.

### PRIOR-ART OF THE INVENTION

The present system for affording insulation between the equipment for raising the bodies of lifts and the base structure or plate at which it is supported gives rise to problems in regard to affording uniform distribution of the loadings at the interposed rubber support members, since the loadings at each of the support points are different and thus each of the rubber support members suffers from different degrees of deformation which contribute to the support structure being poorly mounted in position, as well as undesirable vibration at some of the supports.

At the present time use is made of rubber support members of a given size so that, when the distribution of the loadings involved is not uniform, which is a very frequent situation, different degrees of deformation thereof occur. The machine does not operate in the correct position and its mode of operation is not satisfactory, in particular in regard to vibration.

For example, US-A-3,107,377 discloses a resilient means for insulation between a base means and support points of a weight, wherein the resilient element is of constant thickness and is provided with marks or traverse incisions.

The use of the above-mentioned rubber support members which are in one piece does not make it possible to effect corrections in regard to the operating position, or at least not to the appropriate extent, since all the plug members are of the same hardness and the same sizes. As a result, although in some cases two or more plug members may be installed, adjustment will be practically non-existent.

### DESCRIPTION OF THE INVENTION

According to the invention there is provided an adjustable device for the insulation of machines with which it is possible to establish the appropriate surface area for contact with the base means at each of the machine support points, by the interposition of resilient means, being especially intended for use in the installation of elevators for supporting the structure for lifting the elevator body, the resilient means including a resilient element of constant thickness, provided with marks or transverse incisions to be able to reduce or increase the support surface area in such a way that the pressure at the supports is maintained constant and that the degree of deformation is also constant for the absorption of vibrations and to maintain horizontal positioning of the machine, wherein the resilient elements can be made with different degrees of hardness and include uniformly distributed openings which are capable of accommodating respective resilient plugs of the same or different material, which are preferably adapted to the geometrical dimensions thereof in order to afford the appropriate degree of resilient deformation.

With that arrangement and depending on the load to which a given support point is subjected, it is possible to vary the support surface area or the density of the material in order for deformation to be identical at all the support locations.

The preferred configuration for the resilient element is rectangular with a series of apertures which are equally spaced in the longitudinal direction and with an identical distribution at one side of the longitudinal axis of symmetry or the other. The resilient plugs can be introduced into the apertures, the plugs being of a prismatic shape and of the same height.

In order to facilitate correct positioning of the plugs which can be inserted into the resilient element, at least two oppositely disposed sides of each aperture comprise recesses which are complementary to the projecting portions provided on the plugs, whereby the elements can be fitted together with a dovetail configuration or in the form of a "T".

In order to facilitate understanding of the features of the invention reference is made to the accompanying sheet of drawings, forming an integral part of this specification, in which the Figures, by way of non-limitative illustration, show the following:

### BRIEF DESCRIPTION OF THE DRAWINGS

Figure 1 is a plan view of a resilient element which forms part of the adjustable device for the insulation of machines, in accordance with the invention,
Figure 2 is a view in section taken along section line A-A in Figure 1,
Figure 3 is a plan view of one of the resilient plugs which is capable of being inserted into the resilient element in Figure 1 to increase the resistance to deformation of the assembly, and
Figure 4 is a view in section taken along section line B-B in Figure 3.

### DESCRIPTION OF THE PREFERRED EMBODIMENT

Referring to the numbering shown in the above-indicated Figures, we can see that the adjustable device for the insulation of machines, in accordance with the proposal of the invention, includes a resilient element which is generally indicated by reference numeral 1, of rectangular prismatic shape, the larger lateral surfaces of which have a series of transverse incisions 2 which are equally spaced from each other and by means of which it can be easily reduced in length to the desired extent.

The resilient element 1 also includes a series of apertures 3 which have been formed in an orthogonal direction, in relation to the larger surfaces. The apertures 3 are extended at one of the surfaces to define respective lateral housing means 4.

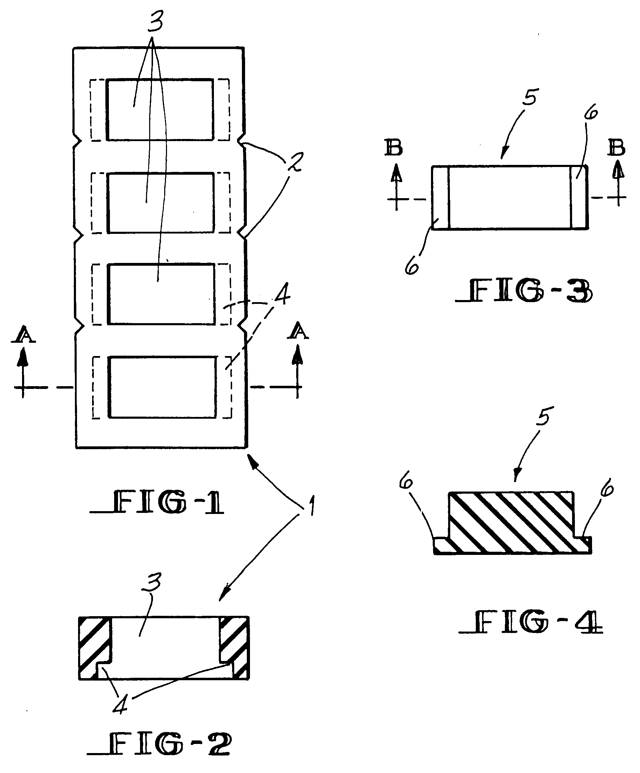

In order to increase the support surface area without having to increase the length of the resilient element 1, both if a portion thereof has been used and if the existing length at the support location is greater than a unit, the adjustable device according to the invention also includes the resilient plugs 5 whose geometry is adapted to that of the aperture 3 and collateral housing means 4, thus being of T-shapead section, as shown in Figure 4.

The plugs 5 can thus be introduced to close off the apertures 3 as is desired to afford the previously calculated support surface area. Therefore the resilient element 1 or main body portion of the adjustable device may be used alone or in combination with as many resilient plugs 5 as may be specified. Similarly the resilient element 1 may be used in its entirety or it may be cut at any of the indicated marks 2.

The limb portions 6 of the T-section of the resilient plug 5 may be introduced into the extension portions 4 of the apertures 3 in the element 1, with the larger surfaces of the two elements being flush.

## Claims

1. An adjustable device for the insulation of machines with which it is possible to establish the appropriate surface area for contact with the base means at each of the machine support points, by the interposition of resilient means, being especially intended for use in the installation of elevators for supporting the structure for lifting the elevator body, the resilient means including a resilient element (1) of constant thickness, provided with marks or transverse incisions (2) to be able to reduce or increase the support surface area in such a way that the pressure at the supports is maintained constant and that the degree of deformation is also constant for the absorption of vibrations and to maintain horizontal positioning of the machine, wherein the resilient elements (1) can be made with different degrees of hardness and include uniformly distributed openings (3) which are capable of accommodating respective resilient plugs (5) of the same or different material, which are preferably adapted to the geometrical dimensions thereof in order to afford the appropriate degree of resilient deformation.

2. An adjustable device for the insulation of machines according to claim 1, wherein the resilient element (1) is of a rectangular prismatic shape with apertures (3) which are equally spaced in the central longitudinal direction and into which can be introducted respective resilient plugs (5) of at least the same height.

3. An adjustable device for the insulation of machines according to claim 2, wherein at least two opposite sides of each aperture (3) comprise recesses (4) which jointly with the corresponding projecting portions (6) of the resilient plugs (5) provide means for correct and stable positioning of the assembly.

4. An adjustable device for the insulation of machines according to claim 3, characterised in that said projecting portions (6) of the plug (5) and the recesses (4) of the aperture (3) define respective oppositely disposed limb portions of rectangular section, which provide that the cross-section of the plug (5) and the aperture (3) is of T-shape.

## Patentansprüche

1. Anpaßbare Vorrichtung für die Isolation von Maschinen, mit der es möglich ist, die geeignete Flächengröße für die Berührung mit der Basiseinrichtung an jeder der Abstützstellen für die Maschine durch das Einfügen einer elastischen Einrichtung zu schaffen, und die insbesondere für die Verwendung bei der Installation von Aufzügen zum Abstützen des Gebildes zum Anheben des Fahrstuhlkörpers bestimmt ist, wobei die elastische Einrichtung ein elastisches Element (1) mit konstanter Dicke aufweist, das mit Markierungen oder Querkerben (2) versehen ist, damit die Abstütz-Flächengröße verkleinert oder vergrößert werden kann derart, daß der Druck an den Abstützungen konstant gehalten wird und auch das Maß der Verformung für die Absorption von Schwingungen konstant ist, und damit die horizontale Positionierung der Maschine beibehalten werden kann, wobei die elastischen Elemente (1) unterschiedliche Härtegrade besitzen können und gleichförmig verteilte Öffnungen (3) aufweisen können, die entsprechende elastische Stopfen (5) aus dem gleichem oder unterschiedlichem Material aufnehmen können, die vorzugsweise an deren geometrische Abmessungen angepaßt sind, um das geeignete Maß der elastischen Verformung zu liefern.

2. Anpaßbare Vorrichtung für die Isolation von Maschinen nach Anspruch 1, bei der das elastische Element (1) eine rechteckige prismatische Form mit Öffnungen (3) besitzt, die in der zentralen Längsrichtung gleich beabstandet sind und in die entsprechende elastische Stopfen (5) mit mindestens der gleichen Höhe eingebracht werden können.

3. Anpaßbare Vorrichtung für die Isolation von Maschinen nach Anspruch 2, bei der mindestens zwei gegenüberliegende Seiten jeder Öffnung (3) Ausnehmungen (4) aufweisen, die gemeinsam mit entsprechenden vorstehenden Bereichen (6) der elastischen Stopfen (5) eine Einrichtung zum genauen und festen Positionieren der Anordnung schaffen.

4. Anpaßbare Vorrichtung für die Isolation von Maschinen nach Anspruch 3,
**dadurch gekennzeichnet,**
daß die vorstehenden Bereiche (6) des Stopfens (5) und die Ausnehmungen (4) der Öffnung (3) jeweilige entgegengesetzt angeordnete Armbereiche mit rechteckigem Schnitt definieren, was dem Stopfen (5) und der Öffnung (3) einen T-förmigen Querschnitt gibt.

## Revendications

1. Dispositif réglable pour l'isolation de machines, avec lequel il est possible d'établir l'aire de surface appropriée pour le contact avec les moyens de base à chacun des points d'appui d'une machine, par interposition de moyens élastiques, ce dispositif étant spécialement destiné à être utilisé dans l'installation d'ascenseurs pour supporter la structure servant à élever la cabine de l'ascenseur, les moyens élastiques comprenant un élément élastique (1) d'épaisseur constante, muni de marques ou d'incisions transversales (2) de manière à permettre de réduire ou d'agrandir l'aire de la surface d'appui de telle manière que la pression au niveau des appuis soit maintenue constante et que le degré de déformation soit lui aussi constant pour l'absorption des vibrations et de manière à maintenir le positionnement horizontal de la machine, dans lequel les éléments élastiques (1) peuvent être réalisés avec différents degrés de dureté et présentent des ouvertures (3) uniformément réparties qui peuvent recevoir des bouchons élastiques (5) respectifs faits de la même matière ou d'une matière différente, qui sont de préférence adaptés aux dimensions géométriques de ces ouvertures afin de donner le degré approprié de déformation élastique.

2. Dispositif réglable pour l'isolation de machines selon la revendication 1, dans lequel l'élément élastique (1) est d'une forme prismatique rectangulaire avec des ouvertures (3) qui sont uniformément espacées dans la direction longitudinale centrale et dans lesquels ont peut introduire des bouchons élastiques respectifs (5) qui ont au moins la même hauteur.

3. Dispositif réglable pour l'isolation de machines selon la revendication 2, dans lequel au moins deux côtés opposés de chaque ouverture (3) présentent des évidements (4) qui, en combinaison avec les parties saillantes correspondantes (6) des bouchons élastiques (5), forment des moyens permettant un positionnement correct et stable de l'ensemble.

4. Dispositif réglable pour l'isolation de machines selon la revendication 3, caractérisé en ce que lesdites parties saillantes (6) du bouchon (5) et les évidements (4) de l'ouverture (3) définissent des portions branches respectives disposées l'une à l'opposé de l'autre, d'une section rectangulaire, qui ont pour effet que la section du bouchon (5) et de l'ouverture (3) est en forme de T.
